# DEMANDE DE BREVET EUROPEEN

(11) **EP 1 193 950 A2**
(43) Date de publication de la demande: **03.04.2002**
(21) Numéro de dépôt: 01460058.9
(22) Date de dépôt: 27.09.2001
(51) Int. Cl.: H04L 29/06

(54) **Procédé d'optimisation, par un élément d'architecture de réseau, de la consulation de données.**

(30) Priorité: 29.09.2000 FR 0012494
(71) Demandeur: Cegetel Groupe, 92915 Paris La Défense (FR)
(72) Inventeur: Bouthors, Nicolas, 38240 Meylan (FR); Grardel, Frédéric, 38120 St. Egreve (FR)
(74) Mandataire: Vidon, Patrice

(57) **Abrégé**

L'invention concerne un procédé d'optimisation de la consultation d'une page (200) de données, consultée sur au moins un terminal (100) par au moins un utilisateur, la page (200) étant téléchargée depuis un site distant (103 ; 104 ; 105 ; 106), via un réseau de communication, le procédé comprenant une étape d'insertion (302 ; 402) à la volée d'au moins un code actif (201) permettant l'exécution d'un algorithme correspondant, dans la page (200) par au moins un élément (101 ; 102) de l'architecture du réseau.

## Description

Le domaine de l'invention est celui de la consultation de données sur un terminal de client, tel notamment un radio-téléphone ou un micro-ordinateur, ces données étant issues d'un réseau de communication.

Plus précisément, l'invention concerne l'optimisation de consultations d'ensembles de données par une pluralité de clients et en particulier l'adaptation de ces données à un client (utilisateur) particulier.

Le réseau de communication peut notamment, mais non exclusivement, être un réseau de type Internet, tel que le réseau mondial Internet. Dans ce cas, les données sont téléchargées à partie de liens d'accès qui sont des adresses-destinations (ou adresses URL, pour "Uniform Ressource Locator" en anglais) vers des pages d'informations (ou pages Web).

En outre, la présente invention s'applique non seulement lorsque le terminal accède directement au réseau de communication, mais aussi lorsqu'il y accède par l'intermédiaire d'au moins un autre réseau de télécommunication, auquel il est abonné. Cet autre réseau de télécommunication est par exemple le réseau téléphonique commuté ("réseau fixe") et/ou un réseau de radiocommunication ("réseau mobile").

Dans le cas d'un réseau de radiocommunication, celui-ci utilise par exemple la norme GSM (pour "Global System for Mobile communications" en anglais), ou une norme équivalente ou concurrente telle que DCS 1800 (pour "Digital Cellular à 1800 MHz", en anglais), PCS 1900 (pour "Personal Communication System à 1900 MHz" en anglais), DECT (pour "Digital European Cordless Telecommunications" en anglais), GPRS (pour "General Packet Radio Service" en anglais) ou UTMS (pour "Universal Mobile Telecommunication System" en anglais).

Afin de montrer les inconvénients de l'art antérieur en terme de consultation de données, on rappelle maintenant les principes de la technique actuelle de consultation de données issues d'une page Web, au sein du réseau Internet. Classiquement, une page Web peut être associée soit à un site (page d'accueil), soit à une partie d'un site (autre(s) page(s) du site). Chaque page Web peut éventuellement aussi correspondre à un service d'un site.

Il est clair que les inconvénients qui vont être décrits à travers un exemple illustratif sont communs aux autres techniques de consultation de données de l'art antérieur.

On suppose que le client considéré accède à un réseau de télécommunication interconnecté au réseau Internet. Via son terminal (ou "équipement de réseau"), il fait une demande de connexion au réseau Internet auprès de son fournisseur d'accès (ou "provider"), qui se charge alors d'assurer une communication entre le terminal du client et le réseau Internet. Après que cette communication est établie, le client peut accéder aux différentes pages Web, selon un mode client-serveur. Il dispose pour cela d'un logiciel client compris dans son terminal, à savoir un navigateur (ou "browser"), présentant notamment un mode de fonctionnement direct et un mode de fonctionnement indirect.

Dans le mode de fonctionnement direct, le navigateur utilise des adresses URL que l'utilisateur connaît et communique directement au navigateur.

Dans le mode de fonctionnement indirect, le navigateur utilise des liens hypertextes (ou hyperliens) contenus dans une autre page Web, affichée à l'écran du terminal. Chaque hyperlien comprend d'une part une adresse URL et une zone de lien hypertexte (image et/ou texte) contenue dans la page Web affichée à l'écran du terminal.

L'adresse URL d'une page a typiquement la forme suivante :
« http://www.monsite.com/mapage.html » où :
- « http » identifie le protocole utilisé ;
- « www.monsite.com » représente le serveur de la page ; et
- « mapage.html » caractérise la page elle-même.

Après que le client a fourni une adresse URL, directement par saisie (mode direct) ou indirectement en cliquant sur une zone de lien hypertexte correspondant à une page Web de son choix (mode indirect), le navigateur détecte le protocole utilisé (« http »), le serveur de la page (« www.monsite.com ») et la page à demander (« mapage.html »). Ensuite, il se connecte au serveur et lui transmet une requête http (de l'anglais « Hyper Text Tranfert Protocole » , protocole de transfert hypertexte couramment utilisé sur le réseau Internet et spécifié dans les normes RFC2616 et RFC2617 publiées par l'IETF et disponibles sous le site http://www.ietf.org/rfc/) demandant le contenu de la page spécifiée. Dans les deux cas, on parle de l'activation du lien d'accès que constitue l'adresse URL.

Cette requête est reçue par le serveur contenant la page Web recherchée (c'est-à-dire dont l'adresse URL a été fournie), afin que par retour cette page Web soit expédiée par le serveur sur le réseau, au travers d'une connexion HTTP (« Protocole de Transfert HyperTexte » ou « Hypertext Transfer Protocol » en anglais). Généralement, le contenu de la page Web est décrit dans un langage de description de page, HTML (pour "Hypertext MarkUp Language" en anglais ou langage à marqueurs hypertexte spécifié dans les normes RFC1866 et RFC2854 définies par l'IETF et disponibles sous le site http://www.ietf.org/rfc ou dans la norme ISO/445 15445 définie par l'ISO/IEC). Ce langage contient des instructions (balises) indiquant au navigateur du terminal client comment organiser la page Web à son arrivée.

L'utilisation classique des adresses URL, telle que décrite ci-dessus, présente plusieurs inconvénients et ne permet pas de répondre à tous les besoins.

Tout d'abord, la présentation des informations se fait selon des critères propres à l'auteur des pages de données consultées et ne tient pas compte des besoins du client.

En outre, l'utilisation classique des adresses URL ne permet pas de faire, de façon automatique, un filtrage des données pertinentes pour un client ou au contraire une censure de certaines données.

De plus, l'utilisation classique des adresses URL ne permet pas de fournir de manière permanente un service web quelque soit le site accédé.

L'utilisation classique des adresses URL ne permet pas n'ont plus l'insertion de publicité dans les pages web lors de l'accès.

L'invention a notamment pour objectif de pallier ces différents inconvénients de l'état de la technique.

Plus précisément, l'un des objectifs de la présente invention est de fournir une technique de consultation de données présentes sur un réseau de communication, enrichies et adaptées à chaque (ou au moins à certains) clients.

Un autre objectif de l'invention est de fournir à un client des données sélectionnées pour ce client en fonction de ses besoins, de ses choix, de ses indications...

L'invention a également pour objectif de tenir compte des données consultées pour proposer à la volée des données complémentaires pertinentes.

L'invention a également pour objectif de fournir une telle technique qui soit simple à mettre en oeuvre et peu coûteuse.

Un autre objectif de l'invention est de fournir une telle technique dont une des variantes de réalisation ne nécessite aucune modification des terminaux des clients.

Encore un autre objectif de l'invention est de permettre à un opérateur ou gestionnaire de site Internet la fourniture d'un service à haute valeur ajoutée.

Un autre objectif de l'invention est de permettre la fourniture permanente d'un service Internet, quel que soit le site accédé.

L'invention a également pour objectif de permettre l'insertion de données complémentaires ciblées, notamment de publicité, dans les pages Internet lors d'un accès.

Ces différents objectifs, ainsi que d'autres qui apparaîtront par la suite, sont atteints selon l'invention à l'aide d'un procédé d'optimisation de consultation d'une page de données consultée sur au moins un terminal par au moins un utilisateur, la page étant téléchargée depuis un premier site distant, via un réseau de communication, remarquable en ce qu'il comprend une étape d'insertion à la volée d'au moins un code actif dans la page par au moins un élément de l'architecture du réseau.

On note qu'un code actif est un code qui permet l'exécution d'un algorithme et/ou d'instructions par le terminal de l'utilisateur.

Ainsi, l'invention a des applications qui notamment permettent d'enrichir le contenu fourni par le premier site distant en lui fournissant notamment un complément d'information ou de services, sans généralement pénaliser les temps d'accès au site distant.

Selon une caractéristique particulière, le procédé d'optimisation de consultation est remarquable en ce que le réseau de communication est un réseau de type Internet.

Un réseau de type Internet est à prendre au sens large et englobe tous les réseaux de données fonctionnant avec des langages à marqueurs tels que notamment HTML (HyperText Mark-up Language), XML (eXtensible Mark-up Language), WML (Wireless Mark-up Language).

Selon une caractéristique particulière, le procédé d'optimisation de consultation est remarquable en ce qu'au moins un élément de l'architecture du réseau appartient au groupe comprenant :
- les serveurs d'hébergeurs de site internet ;
- les équipements de fournisseurs d'accès ;
- les équipements de fournisseurs de services
- les routeurs ;
- les commutateurs ;
- les passerelles ; et
- les proxys.

Ainsi, on tire profit avantageusement de toutes les possibilités d'un réseau de type Internet, les données échangées entre un site distant et un terminal transitant généralement par divers éléments de réseaux qui peuvent facilement insérer la volée un ou plusieurs codes actifs.

On note que les fournisseurs d'accès ou de services sont particulièrement bien placés pour insérer du code actif à la volée dans des données transitant par leurs équipements et touchent beaucoup d'utilisateurs potentiels.

Selon une caractéristique particulière, le procédé d'optimisation de consultation est remarquable en ce que la zone de la page où est inséré le code actif est déterminée selon le type d'action engendrée par le code actif.

Ainsi, l'insertion d'un code actif dans une zone précise de page de données peut particulièrement être bien adaptée à certaines applications :
- l'insertion de code actif en début de page est, par exemple, bien adaptée à des applications de type censure de certaines données ou limitation d'accès à des URL présents dans les données ;
- l'insertion de code actif en fin de page est, par exemple, bien adaptée à des applications de type publicité ciblée.

Selon une caractéristique particulière, le procédé d'optimisation de consultation est remarquable en ce que le code actif inséré à la volée est un code actif final permettant l'exécution d'un algorithme sur le terminal.

Selon une caractéristique particulière, le procédé d'optimisation de consultation est remarquable en ce que le code actif inséré à la volée est un code actif intermédiaire d'invocation, qui lorsqu'il est exécuté par le terminal permet au terminal d'invoquer un fournisseur de code actif final, afin que le terminal reçoive de celui-ci un code actif spécifique final permettant l'exécution d'un algorithme sur le terminal.

Ainsi, l'invention permet avantageusement de prendre en compte deux types de codes actifs différents :
- code actif exécutant directement un algorithme final sur le terminal ; ou
- code actif intermédiaire invoquant un code actif final qui sera exécuté sur le terminal.

Ces deux types de code actif sont intéressants. Le code actif directement exécuté sur le terminal est directement exploitable par le terminal alors que le code actif intermédiaire peut notamment être personnalisé plus facilement qu'un code actif directement exécuté.

Selon une caractéristique particulière, le procédé d'optimisation de consultation est remarquable en ce que lors de l'invocation du fournisseur de code actif final par le terminal, le terminal fournit en outre au moins un cookie.

Un « cookie» est un mécanisme Internet qui permet à des développeurs de sites de placer des informations chez le terminal pour un usage ultérieur. Un cookie est notamment une mémoire ou unité de stockage qui permet de stocker de l'information sous forme hexa-décimale. Un navigateur s'exécutant sur un terminal stocke les cookies qu'un site lui donne et les tient à la disposition des codes scripts inclus dans les pages de ce site, ou les transmet au serveur de Web du site en même temps que la demande de contenu lorsque la page demandée est le résultat d'un exécutable.

Ainsi, le cookie délivré pourra avantageusement être utilisé par un code actif émis par le site ayant délivré le cookie ou par ce site pour délivrer un code actif personnalisé.

Selon une caractéristique particulière, le procédé d'optimisation de consultation est remarquable en ce qu'il comprend en outre au moins une étape précédant l'étape d'insertion à la volée et faisant partie du groupe comprenant :
- les étapes de redirection d'un accès du terminal vers le fournisseur de code actif final ;
- les étapes de définition d'un profil d'utilisateur du terminal ;
- les étapes de génération du cookie en fonction du profil d'utilisateur du terminal ;
- les étapes de fourniture du cookie par le fournisseur de code actif final au terminal ; et
- les étapes de stockage du au moins un cookie par le terminal.

Selon une caractéristique particulière, le procédé d'optimisation de consultation est remarquable en ce que le cookie est utilisé à des fins d'identification.

Selon une caractéristique particulière, le procédé d'optimisation de consultation est remarquable en ce que le fournisseur de code actif final tient compte du contenu du au moins un cookie pour générer le code actif final spécifique.

Ainsi, de manière avantageuse, l'invention permet à un utilisateur de définir un profil lors d'un accès préalable au fournisseur de code actif final, ce profil pouvant contenir notamment des informations d'identification de l'utilisateur, des informations indiquant ses préférences (informations qui l'intéressent particulièrement ou au contraire qu'il ne souhaite pas, mode de présentation des informations ...). Ce profil étant stocké sous forme de cookie rattaché au fournisseur de code actif final, le script final pourra soit utiliser sur le terminal les informations issues du cookie, soit être généré en fonction de ces informations après délivrance du cookie au fournisseur de code actif final.

Selon une caractéristique particulière, le procédé d'optimisation de consultation est remarquable en ce que le code actif appartient au groupe comprenant :
- les codes script interprétés par un navigateur ;
- les « includes » de code script interprétés par un navigateur ;
- les objets navigateurs ;
- les exploitations d'objet navigateur ;
- les applets;
- les exploitations d'applet ; et
- les macros instructions Ainsi, l'invention prend en compte les nombreuses variantes de code actif qui existent, notamment:

- les codes scripts qui sont des suites d'instructions, utilisées notamment pour manipuler, personnaliser et automatiser certaines tâches offertes par le terminal ; il existe plusieurs langages permettant d'écrire des codes scripts ( Les spécifications d'un exemple de langage script sont disponibles dans le document « ECMAScript Language Spécification » publié par l'ECMA et disponible sous le site http://www.ecma.ch. D'autres langages scripts existent notamment les langage JavaScript ® développé par la société Netscape ® et Jscript ® développé par la société Microsoft®.);
- les « includes» de codes scripts (ou code script externe) qui caractérisent les instructions d'inclusion de code scripts, supportée par le langage utilisé durant les échanges. (Le terme « include » est un terme utilisé dans les langages supportant les codes script) ;
- les objets navigateurs tels que notamment les ActiveX® qui sont des objets navigateurs ajoutés dynamiquement dans le cadre des systèmes d'exploitation développés par la société Microsoft ® tels que Windows ®;
- les exploitations d'objet navigateur qui invoquent indirectement au moins une fonctions d'objet navigateur ;
- les « applets» qui sont de petites applications développées en langage Java invoquées par une page Internet, téléchargées et exécutées par le terminal et qui contrôlent l'accès aux ressources ;
- les exploitations d'applet qui invoquent indirectement une ou plusieurs fonction d'applet ;
- les macros instructions qui sont des séquences d'instructions pouvant être utilisées notamment dans des logiciels fonctionnant sur le terminal tels que par exemple des logiciels de traitement de texte, de dessins, des tableurs.

L'invention permet avantageusement de tirer le meilleur parti du terminal en fonction de l'application visée.

Selon une caractéristique particulière, le procédé d'optimisation de consultation est remarquable en ce que le code actif inséré dans la page est chargé et/ou interprété et/ou exécuté par le terminal avant, pendant et/ou après l'affichage de la page sur le terminal.

Ainsi, suivant le type d'application, le code actif sera avantageusement exécuté avant, pendant et/ou après l'affichage de la page, notamment en fonction du type d'application.

Selon une caractéristique particulière, le procédé d'optimisation de consultation est remarquable en ce que le code actif est exécuté dans un navigateur compris dans le terminal.

Selon une caractéristique particulière, le procédé d'optimisation de consultation est remarquable en ce que le code actif est généré spécifiquement en fonction d'au moins un critère propre à un élément faisant partie du groupe comprenant :
- le ou les utilisateurs du terminal ;
- le terminal ;
- le premier site distant;
- la page ;
- les éléments de l'architecture du réseau ; et
- le navigateur utilisé par le terminal.

Selon une caractéristique particulière, le procédé d'optimisation de consultation est remarquable en ce que le critère appartient au groupe comprenant :
- l'identité de l'utilisateur du terminal ;
- les préférences de 1' utilisateur du terminal ;
- l'adresse et/ou le nom du domaine du premier site distant;
- l'adresse de la page téléchargée ;
- le type et/ou la version du navigateur utilisé par le terminal ;
- le type et/ou la version du terminal ;
- le protocole de transfert utilisé pour le téléchargement de la page téléchargée ; et
- le fournisseur d'accès ou de service Internet permettant au terminal d'accéder au premier site distant.

Ainsi, l'invention permet avantageusement de personnaliser les codes actifs en fonction de critères très différents pouvant comprendre notamment les critères suivants:
- L'utilisateur et ses préférences identifiables notamment par cookie ;
- les adresses de la page téléchargée et du site notamment les adresses URL (de l'anglais Uniform Resource Locator qui spécifient sans ambiguïté la localisation physique de la page et du site) ;
- le type et la version du navigateur qui sont des informations directes transmises par le navigateur ;
- le type et la version du terminal qui sont des informations indirectes transmises par le navigateur ;
- le protocole de transfert qui peut être notamment de type HTTP, FTP, POP, IMAP, RSTP; et
- le fournisseur d'accès ou de service Internet (ou ISP/IAP) qui est identifiable par sa plage d'adressage .
Selon une caractéristique particulière, le procédé d'optimisation de consultation est remarquable en ce qu'il est utilisé pour au moins une application appartenant au groupe :
- insertion, dans la page, d'informations, notamment publicitaires ;
- insertion, dans la page, d'informations, notamment publicitaires, fonction du contenu de la page ;
- insertion, dans la page, d'informations relatives à des évènements gérés un deuxième site distant connecté au réseau ;
- insertion dans la page d'informations relatives à des données disponibles sur un portail ayant un rapport avec le contenu de la page ;
- fourniture à l'utilisateur, via la page, d'au moins un service fourni par au moins un troisième site distant connecté au réseau ;
- archivage d'informations liées à l'activité sur le réseau de l'utilisateur du terminal ;
- modification de la présentation des données ;
- censure d'au moins une donnée parmi les données ; et
- invocation d'au moins un second code actif.

Ainsi, l'invention permet avantageusement de mettre en oeuvre de nombreuses applications qui ne sont pas gérées directement par le premier site distant.

Selon une caractéristique particulière, le procédé d'optimisation de consultation est remarquable en ce qu'il est utilisé pour au moins une application de type insertion dans la page d'informations additionnelles, et en ce que le code actif met en oeuvre les opérations suivantes :
- recherche d'au moins une information spécifique dans la page ;
- création d'une liste d'informations spécifiques trouvées dans la page ;
- création d'une zone d'insertion d'informations additionnelles dans la page ;
- fourniture de la liste d'information spécifiques à un fournisseur d'informations additionnelles connecté au réseau ; et
- remplissage de la zone d'insertion d'informations additionnelles avec des données fournies par le fournisseur d'informations en réponse à la opération de fourniture de la liste d'informations spécifiques.

Selon une caractéristique particulière, le procédé d'optimisation de consultation est remarquable en ce que les informations additionnelles appartiennent au groupe comprenant :
- les informations publicitaires ;
- les annotations ;
- les liens complémentaires vers des sites distants traitant du même sujet que la page téléchargée ;
- les liens complémentaires vers des sites distants traitant de sujets connexes au sujet de la page téléchargée ;
- les mots clés alternatifs ;
- les notes attribuées au premier site distant ; et
- les tables d'indexation des éléments de la page téléchargée.

Ainsi, l'invention permet avantageusement d'ajouter des informations notamment de types annotations qui peuvent être à forte valeur ajoutées si elles par exemple émise par des tiers indépendants du premier site, et/ou des mots clefs alternatifs (notamment des synonymes ou des associations permettant par exemple de lancer une recherche sur Internet appropriée et/ou précise) et/ou des tables d'indexation permettent un accès rapide à la page.

Selon une caractéristique particulière, le procédé d'optimisation de consultation est remarquable en ce qu'il est utilisé pour au moins une application de modification de la présentation des données ;
et en ce que le code actif met en oeuvre les opérations suivantes :
- recherche d'au moins une information spécifique dans la page ;
- création d'une liste d'informations spécifiques trouvées dans la page ;
- fourniture de la liste d'information spécifiques à un fournisseur d'informations connecté au réseau ;
- présentation d'au moins une partie des données téléchargée selon un format défini par le fournisseur d'informations en réponse à l'opération de fourniture de la liste d'informations spécifiques.

Ainsi, l'invention permet avantageusement non seulement d'enrichir le contenu des données mais aussi d'enrichir la forme en redéfinissant le cas échéant le format de ces données pour mettre en relief certaines parties ou au contraire les rendre moins visibles en fonction de critères quelconques.

Selon une caractéristique particulière, le procédé d'optimisation de consultation est remarquable en ce qu'il est utilisé pour au moins une application de censure d'au moins une donnée parmi les données,
et en ce que le code actif met en oeuvre les opérations suivantes :
- recherche d'au moins une information spécifique dans la page ;
- création d'une liste d'informations spécifiques trouvées dans la page ;
- fourniture de la liste d'information spécifiques à un fournisseur d'informations connecté au réseau ;
- censure d'au moins une partie des données selon au moins un critère défini par le fournisseur d'informations en réponse à l'opération de fourniture de la liste d'informations spécifiques.

Ainsi, l'invention permet avantageusement d'empêcher l'affichage de certaines données parce qu'elles peuvent être notamment non désirées par l'utilisateur ou non autorisées pour l'utilisateur selon son profil.

Selon une caractéristique particulière, le procédé d'optimisation de consultation est remarquable en ce qu'il est utilisé pour au moins une application d'invocation d'au moins un second code actif,
et en ce que le code actif met en oeuvre les opérations suivantes :
- recherche d'au moins une information spécifique dans la page ;
- création d'une liste d'informations spécifiques trouvées dans la page ;
- fourniture de la liste d'information spécifiques à un fournisseur d'informations connecté au réseau ;
- invocation d'au moins un second code actif selon au moins un critère défini par le fournisseur d'informations en réponse à l'opération de fourniture de la liste d'informations spécifiques.

Ainsi, l'invention permet avantageusement la fourniture d'un second code actif personnalisé en fonction notamment des données.

Selon une caractéristique particulière, le procédé d'optimisation de consultation est remarquable en ce que l'information spécifique appartient au groupe d'informations comprenant :
- les mots clés ;
- les adresses de liens;
- les adresses des éléments rapportés dans la page téléchargée; et
- les informations de création de la page téléchargée.

Ainsi, le code actif dépend avantageusement des éléments liés aux données, notamment des éléments rapportés dans la page téléchargée qui sont par exemple des images et/ou des informations de création de la page qui sont notamment son auteur, la date de création et la société à laquelle appartient son auteur.

Selon une caractéristique particulière, le procédé d'optimisation de consultation est remarquable en ce que l'information spécifique est mise à jour selon un critère prédéterminé.

Selon une caractéristique particulière, le procédé d'insertion de code actif est remarquable en ce que le critère prédéterminé appartient à un groupe de critères comprenant :
- l'identité de l' utilisateur du terminal ;
- les préférences de l'utilisateur du terminal ;
- l'adresse et/ou le nom du domaine du premier site distant;
- l'adresse de la page téléchargée ;
- le type et/ou la version du navigateur utilisé par le terminal ;
- le type et/ou la version du terminal ;
- le protocole de transfert utilisé pour le téléchargement de la page téléchargé ; et
- le fournisseur d'accès Internet permettant au terminal d'accéder au premier site distant.

Ainsi, le code actif dépend avantageusement non seulement des éléments liés aux données, mais aussi d'éléments liés au terminal, à son utilisateur ou au fournisseur d'accès Internet.

Selon une caractéristique particulière, le procédé d'insertion de code actif est remarquable en ce qu'il est utilisé pour au moins une application de type fourniture permanente à l'utilisateur, via la page, d'au moins un service fourni par au moins un quatrième site distant connecté au réseau, et en ce que le code actif, lors de son exécution par le terminal, déclare le service dans la page.

La déclaration du service dans la page signifie que le code actif rend le service accessible lorsque la page est téléchargée sur le terminal en l'associant par exemple à un événement.

Selon une caractéristique particulière, le procédé d'insertion de code actif est remarquable en ce que le code permet la mise en oeuvre par le terminal d'un menu d'accès au service.

Selon une caractéristique particulière, le procédé d'insertion de code actif est remarquable en ce que le service appartient au groupe comprenant:
- des services d'accès simplifiés à de l'information autre que celle contenue dans la page;
- des services d'accès simplifiés à des moteurs de recherche ;
- des services d'accès simplifiés à des fonctions évoluées d'un navigateur compris dans le terminal;
- des services de surveillance d'évènements externes ; et
- des accès simplifiés à au moins un service disponible de manière manuelle sur Internet et qui nécessite au moins une saisie de données.

Ainsi, dans un mode avantageux de réalisation de l'invention, l'insertion à la volée de code actif permet les accès simplifiés à des services liés
- à la détection et l'exploitation d'une sélection (sélection d'un mot, d'un groupe de mot, d'une image, d'un lien..) par une souris connectée au terminal; et/ou
- à la simplicité de déclenchement du service (menu contextuel ou double click de souris)

L'insertion à la volée de code actif permet par ailleurs d'accéder à des services disponibles de manière manuelle sur Internet et qui nécessite au moins une saisie de données (notamment des mots, des phrases, des adresses URL), comme par exemple:
- la recherche de contenu web (moteur de site au sens commun du terme) ;
- la recherche de prix ou de prestation sur le web (moteur de comparaison de prix, bibliothèque de références professionnelles..);
- la recherche de sens (encyclopédies) ; et
- la traduction multilingue (dictionnaires, automates de traduction de phrases)

La notion de « surveillance d'évènements externes » est à rapprocher de la personnalisation du code actif rendu par un serveur de code actif. En effet, il est possible de rendre un code générant un message d'alerte chaque fois qu'un événement doit être transmis à l'utilisateur identifié (par cookie) (par exemple, un événement externe est l'arrivée d'un courrier électronique sur le compte de courrier électronique de l'utilisateur sur un portail, alors qu'il navigue sur un autre site que le portail).

La surveillance d'évènements externes permet notamment de rendre un code générant un message d'alerte chaque fois qu'un événement doit être transmis à l'utilisateur identifié (par cookie)

Selon une caractéristique particulière, le procédé d'insertion de code actif est remarquable en ce que le service est attaché à au moins un événement appartenant au groupe comprenant:
- les actions sur une interface homme-machine; et
- les évènements de navigation.

Ainsi, de façon avantageuse, ainsi un code actif peut être associé à des actions sur une souris pilotant le terminal (notamment les cliques droits (entraînant un affichage de menu contextuel), le double clique, le déplacement d'un pointeur commandé par la souris dans ou hors d'une zone de l'écran), à des actions sur une ou plusieurs touches de clavier, à des actions combinées sur la souris et au moins une touche de clavier (notamment enchaînements et synchronisation de plusieurs actions sur la souris et au moins une touche de clavier), à des actions sur un écran sensitif, à un pilotage par la voix.

Les icônes sont particulièrement intéressantes dans le cadre des terminaux mobiles, dont l'écran est de petite taille.

Par ailleurs, les évènements de navigation seront notamment les débuts et fins de chargement de page, les sorties de page, les erreurs de chargement, les erreurs d'interprétation, les erreurs d'exécution.

Selon une caractéristique particulière, le procédé d'insertion de code actif est remarquable en ce que le service est attaché à au moins un élément de langage à marqueurs.

Les langages à marqueurs considérés sont notamment HTML (HyperText Mark-up Language), XML (eXtensible Mark-up Language), WML (Wireless Mark-up Language)

Des éléments de langage à marqueurs sont notamment une barre de menu qui peut être escamotable ou des icônes en surimpression sur l'écran du terminal.

Selon une caractéristique particulière, le procédé d'insertion de code actif est remarquable en ce que l'étape d'insertion à la volée est systématique ou sélective.

L'insertion à la volée peut être sélective par exemple en fonction de l'adresse URL du site distant.

Selon une caractéristique particulière, le procédé d'insertion de code actif est remarquable en ce que l'exécution du code actif est interrompue lorsque l'utilisateur demande l'affichage d'une nouvelle page de données.

Selon une caractéristique particulière, le procédé d'insertion de code actif est remarquable en ce que lorsque la page de données est composée d'au moins deux sous-pages, le code actif est inclus dans chaque sous-page.

L'invention propose en outre un système remarquable en ce qu'il comprend des moyens adaptés à la mise en oeuvre du procédé d'insertion de code actif décrit précédemment.

L'invention propose en outre un dispositif d'insertion d'au moins un code actif dans une page de données, consultée sur au moins un terminal par au moins un utilisateur, la page étant téléchargée depuis un premier site distant, via un réseau de communication auquel appartient le dispositif, remarquable en ce qu'il comprend des moyens d'insertion à la volée du code actif dans la page.

Selon une caractéristique particulière, le dispositif d'insertion d'au moins un code actif est remarquable en ce qu'il appartient au groupe comprenant:
- les serveurs d'hébergeurs de site internet ;
- les équipements de fournisseurs d'accès ;
- les équipements de fournisseurs de services
- les routeurs;
- les commutateurs ;
- les passerelles ; et
- les proxys.

Les caractéristiques particulières et les avantages des dispositifs et du système d'insertion de code actif à la volée étant les mêmes que ceux du procédé d'insertion de code actif à la volée, ils ne sont pas rappelés ici.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 illustre schématiquement un réseau, conforme à l'invention, selon un mode particulier de réalisation;
- la figure 2 décrit une page de code source, conforme à l'invention selon un mode particulier de réalisation ;
- la figure 3 présente un protocole de communication avec insertion d'un script dans une page de données par un foumisseur de service Internet, conforme à l'invention, selon un mode particulier de réalisation ;
- la figure 4 présente un protocole de communication avec insertion d'un « include » de code script dans une page de données par un fournisseur de service Internet, conforme à l'invention, selon un mode particulier de réalisation;
- la figure 5 présente un protocole de communication avec insertion d'un « include » de code script pour une application de type insertion de publicité, conforme à l'invention, selon un mode particulier de réalisation;
- la figure 6 présente un protocole de communication avec insertion d'un « include » de code script pour une application de type fourniture permanente d'un service Internet, conforme à l'invention, selon un mode particulier de réalisation.

Le principe général de l'invention repose sur l'insertion de code actif à la volée par un élément d'une infrastructure de réseau dans des données téléchargées sur un terminal (tel par exemple un un micro ordinateur ou radio téléphone, un terminal sans fil ou mobile notamment de type GSM, GPRS ou UMTS) à partir du réseau.

Le réseau est notamment un réseau de type Internet ; un élément d'une infrastructure d'un tel réseau est par exemple un équipement d'hébergeur de site Internet, un routeur, un commutateur, une passerelle, un proxy ou une combinaison d'au moins deux de ces équipements.

Les données téléchargées sont généralement spécifiées dans un langage à marqueur tel que par exemple les langages HTML, XML, WML.

Lorsque le terminal reçoit les données téléchargées, il exécute séquentiellement les instructions spécifiées incluant le code actif.

Ce code actif peut prendre plusieurs formes selon, notamment, le type d'application:
- les codes script interprétés par un navigateur ;
- les « includes » de codes script interprétés par un navigateur ;
- les objets navigateurs ;
- les exploitations d'objet navigateur ;
- les applets ;
- les exploitations d'applet; et
- les macros instructions

Le code actif peut être considéré comme final ou intermédiaire:
- lorsque le code actif est un code final, il ne fait pas appel à un serveur de scripts lors de son exécution sur le terminal ;
- lorsque le code actif inséré est un code actif intermédiaire d'invocation, lorsqu'il est exécuté par le terminal, il permet au terminal d'invoquer un code actif final auprès notamment d'un serveur de script, afin que le terminal reçoive de celui-ci un code actif spécifique final permettant l'exécution d'un algorithme sur le terminal. Dans ce cas, le code actif final peut tirer partie d'un cookie rattaché au serveur de scripts et déjà présent sur le terminal en exploitant les informations fournies par ce cookie.

D'une manière générale, un ou plusieurs cookies peuvent être fournis au terminal lors d'un premier accès au serveur de code script.

Puis, suite à une demande de contenu, un code actif intermédiaire d'invocation va être inséré à la volée dans le contenu. Ce code actif va entraîner une demande de code script au serveur de code script, le ou les cookies étant fournis au serveur de code script en même temps que la demande. Le serveur de scripts analyse le ou les cookies reçus, compose un code script en fonction du ou des cookies reçus et émet vers le terminal le code script composé qui est ainsi adapté à l'utilisateur du terminal, voire personnalisé.

Parmi, les applications majeures de l'insertion à la volée de code actif, on peut citer:
- l'insertion d'annotations personnalisées dans des pages de données consultées sur le terminal; (on pourra notamment utiliser le procédé tel que décrit dans la demande de brevet ayant pour titre « procédé et système de consultation de données » déposé le même jour que la présente demande par le même déposant. Le texte de cette autre demande est inséré ici par référence.)
- l'insertion de données complémentaires ciblées, notamment de publicité, dans des pages de données consultées sur le terminal ;
- la fourniture de services faciles d'accès par l'utilisateur qui lui permettent notamment d'accéder (notamment par simple click de souris ou simple frappe de touches de fonction sur le clavier du terminal) à un site distant privilégié.

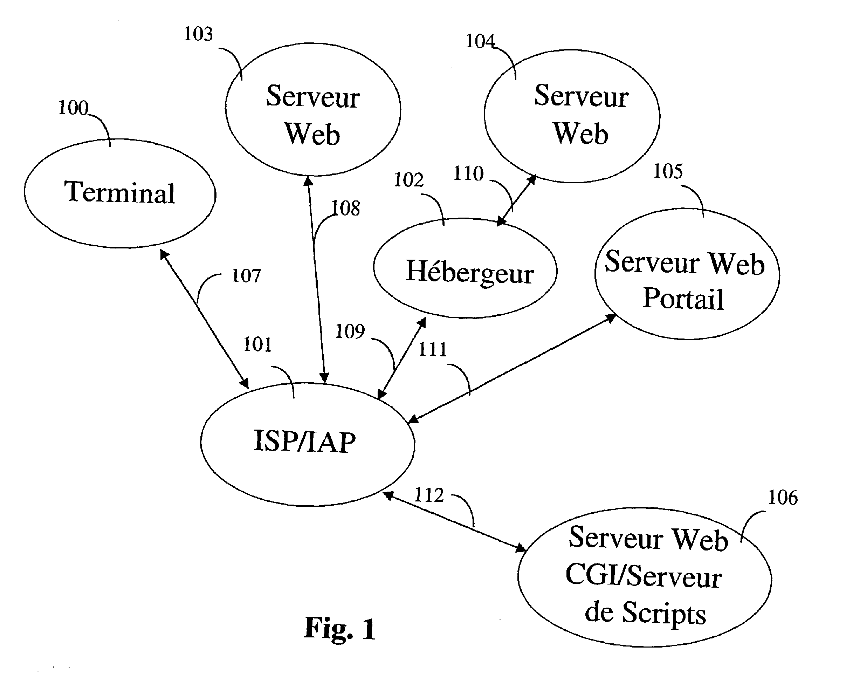

On présente, en relation avec la figure 1, une infrastructure de réseau de télécommunication permettant la mise en oeuvre de l'invention selon un mode préféré de réalisation.

Cette infrastructure comprend notamment:
- un terminal client 100;
- un équipement 101 de Fournisseur de Service Internet (ISP) ou de Fournisseur de Service d'Accès (IAP);
- un équipement 102 d'hébergeur de sites Internet;
- deux serveurs de site web 103 et 104;
- un serveur de site web 105 assurant une fonction de portail ; et
- un serveur de site web 106 assurant une fonction de serveur de scripts et/ou de CGI (Passerelle à Interface Commune ou « Common Gateway Interface » en anglais, dont les spécifications sont décrites sur le site http://hoohoo.ncsa.uiuc.edu/cgi/).

Le terminal client 100 est d'un type quelconque tel que par exemple, ordinateur et/ou terminal mobile.

Le terminal client 100 peut accéder via une liaison 107 à un équipement 101 de Fournisseur de Service Internet (ISP) ou de Fournisseur de Service d'Accès (IAP) qui lui permet notamment de télécharger des données.

L'équipement 101 de Fournisseur de Service Internet (ISP) ou de Fournisseur de Service d'Accès (IAP) est relié aux serveurs Web 103, 105 et 106 via respectivement des liaisons 108, 111 et 112.

L'équipement 101 de Fournisseur de Service Internet (ISP) ou de Fournisseur de Service d'Accès (IAP) est relié est par ailleurs relié à l'équipement 102 d'hébergeur de sites Internet via une liaison 109.

L'équipement 102 d'hébergeur de sites Internet est lui-même relié à un serveur web 104 via une liaison 110.

Les liaisons 107, 108, 109, 110, 111 et 112 sont des liaisons de communications quelconques notamment des liaisons faisant partie d'un réseau téléphonique commuté (RTC), des liaisons de type Internet et/ou des liaisons appartenant à un réseau de radiocommunications (par exemple selon la norme GSM, ou autre).

Ainsi, le terminal 100 peut accéder au contenu des sites gérés par l'un quelconque des serveurs 103, 104, 105 ou 106.

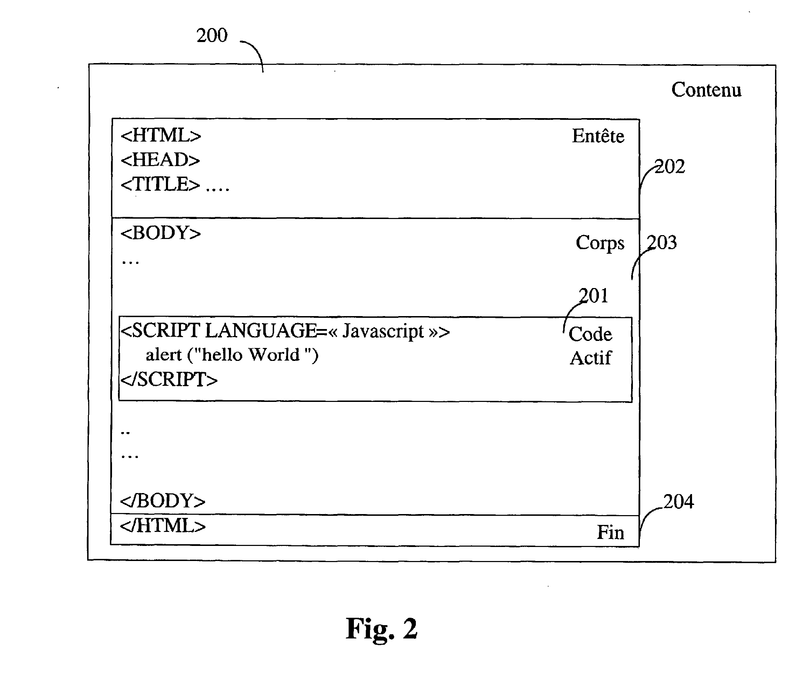

La figure 2 illustre schématiquement une page de codes source 200 telle quelle est présentée au terminal 100 après insertion d'un code actif dans une page de données fournie par un serveur de contenu tel l'un quelconque des serveurs 103, 104, 105 ou 106.

On note que la page de contenu 200 est une page de contenu qui est divisée en trois parties
- un entête 202 contenant notamment des instructions qui permettent d'identifier le langage utilisé (ici, HTML par exemple) et un titre de page.
- un corps 203 qui contient notamment des informations et un code actif 201
- une fin 204 contenant notamment une instruction de fin de page HTML

Dans le mode préféré de réalisation, le code actif est un code Javascript qui commence par un marqueur indiquant le début d'un script et son type (« <SCRIPT LANGUAGE = « Javascript »> »), qui se poursuit par une ou plusieurs instructions spécifiques qui seront exécutées sur le terminal 100 (par exemple, l'ouverture d'une fenêtre d'alerte contenant un message « hello world » par l'instruction alert(« hello world »)) et se termine par un marqueur indiquant la fin du code script (« </SCRIPT> »).

On note qu'un code script contient notamment:
- une ou plusieurs instructions qui sont interprétées et exécutées séquentiellement ; et éventuellement
- une ou plusieurs fonctions pouvant être appelées lors de l'exécution du code script ou à la suite d'un événement géré par une application tel un navigateur.

En première variante, le code script n'est pas placé au sein du corps 203 du contenu 200 mais dans son entête 202, ou dans la fin 204. Il peut aussi être placé à l'extérieur des zones HTML tout en restant à l'intérieur du contenu 200 fourni au terminal 100.

En seconde variante, plusieurs codes actifs correspondant ou non à la même application sont insérés dans le contenu 200.

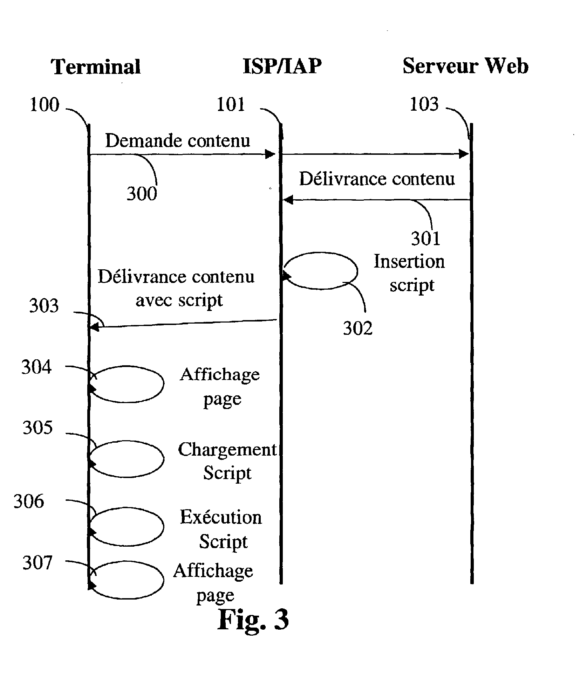

La figure 3 présente un protocole de communication avec insertion d'un script dans une page de données par un fournisseur de service Internet 101.

Suite à la consultation 300 par le terminal 100 du site du serveur 103 de site web via le fournisseur d'accès 101, le serveur 103 délivre un contenu au fournisseur d'accès 101 lors d'une étape de délivrance de contenu 301.

Puis lors d'une étape 302 d'insertion de script, le fournisseur d'accès insère un script 201 tel que décrit en regard de la figure 2, dans le contenu délivré.

En variante de l'étape 302 d'insertion de script, le fournisseur d'accès insère le script 201 selon un critère prédéterminé tel que, par exemple, l'adresse du serveur 103.

Selon une autre variante de l'étape 302, lorsque le contenu 200 est divisé en sous-pages, le fournisseur d'accès insère le script 201 dans chaque sous-page.

Ensuite, lors d'une étape 303 de délivrance de contenu avec script, le fournisseur d'accès 101 délivre un contenu 200 tel que décrit en regard de la figure 2 contenant le code script 201 inséré, au terminal 100.

Puis, le terminal 100, exécute séquentiellement les instructions présentes dans le contenu 200 reçu.

Ainsi, lors d'une étape 304 d'affichage de début de page, le terminal 100 commence par exécuter les premières instructions du contenu notamment les instructions présentes dans l'entête 202 et dans le début du corps 203.

Puis, lors d'une étape 305, le terminal 100 charge le script 201 en mémoire.

Ensuite lors d'une étape 306, le terminal 100 interprète le script 201 (une interprétation de script consiste à traduire le script qui est écrit dans un langage haut niveau non directement compréhensible par le terminal 100 en actions élémentaires sans passage par un code machine) et l'exécute pour, par exemple, ouvrir une fenêtre d'alerte et afficher un message.

Selon une variante de l'étape 306, l'interprétation et l'exécution du code script sont interrompues dès que l'utilisateur demande l'affichage d'une nouvelle page de données.

Selon la première variante décrite en regard de la figure 2, le code script n'est pas placé au sein du corps 203 du contenu 200 mais dans son entête 202, ou dans la fin 204. Il peut aussi être placé à l'extérieur des zones HTML tout en restant à l'intérieur du contenu 200 fourni au terminal 100.

Lorsque le code script est placé dans la partie entête 202, ou avant la zone HTML, les étapes d'interprétation 305 et d'exécution 306 de script ont lieu avant l'étape 304 d'affichage de début de page (se confondant alors avec l'étape 307 d'affichage de fin de page).

Une application directe de la première variante est une application de type censure de page web. Selon cette application, le code script est placé dans la partie entête 202, ou avant la zone HTML, et permet la censure de tout ou partie des données qui suivent le code script dans le contenu. Les données pourront notamment être censurées (c'est à dire non affichée sur le terminal 100 et/ou rendues indisponibles) si l'utilisateur du terminal 100 n'a pas les autorisations nécessaires pour accéder aux données.

Lorsque le code script est placé dans la partie fin 204, ou après la zone HTML, les étapes d'interprétation 305 et d'exécution 306 de script ont lieu après l'étape 307 d'affichage de fin de page 304 (se confondant alors avec l'étape 304 d'affichage de début de page).

Ainsi, une autre application directe de la première variante est une application de type annotation ou informations complémentaires (telles notamment des informations publicitaires) affichées notamment à la suite des données à la fin de l'affichage de ces données.

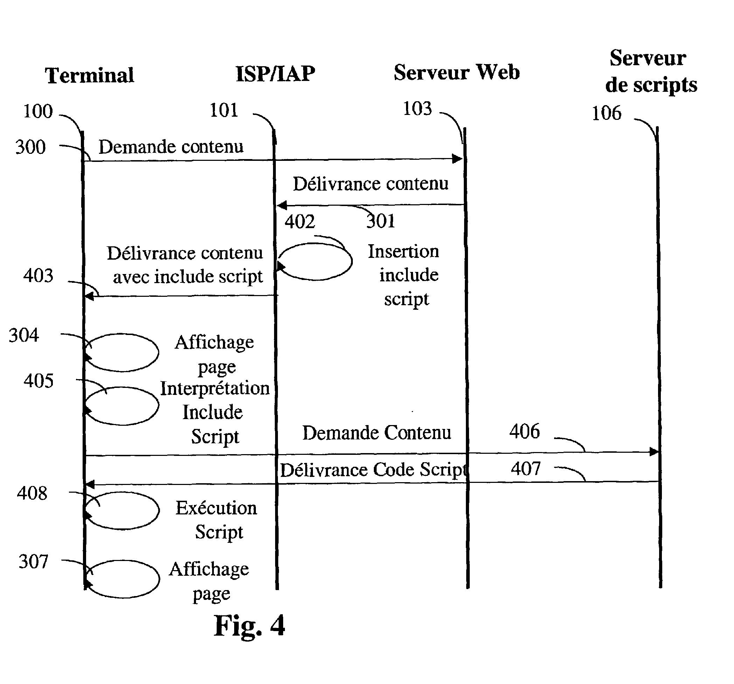

La figure 4 présente une variante du protocole de communication avec insertion d'un « include » de code script dans une page de données par un fournisseur de service Internet 101.

Suite à la consultation 300 par le terminal 100 du site du serveur 103 via le fournisseur d'accès 101, le serveur 103 délivre un contenu au fournisseur d'accès 101 lors d'une étape de délivrance de contenu 301.

Puis lors d'une étape 402 d'insertion d' « include » de code script, le fournisseur d'accès 101 insère un code actif de type « include » de code script.

L' « include » de code script s'insère de manière similaire à un code script 201 au sein d'un contenu 200.

En variante de l'étape 402, le fournisseur d'accès insère l'« Include » de code script 201 selon un critère prédéterminé tel que, par exemple, l'adresse du serveur 103.

Selon une autre variante de l'étape 402, lorsque le contenu 200 est divisé en sous-pages, le fournisseur d'accès insère l' « Include » de code script 201 dans chaque sous-page.

Ensuite, lors d'une étape 403 de délivrance de contenu avec « include » script, le fournisseur d'accès 101 délivre un contenu 200 contenant l'« include » de code script inséré.

Puis, le terminal 100 exécute séquentiellement les instructions présentes dans le contenu 200 reçu.

Ainsi, lors d'une étape 304 d'affichage de début de page, le terminal 100 commence par exécuter les premières instructions du contenu notamment les instructions présentes dans l'entête 202 et dans le début du corps 203.

Puis, lors d'une étape 405, le terminal 100 interprète l' « include » de code script en décodant les instructions présentes dans l' « include » de code script.

Ensuite, lors d'une étape 406 de demande de contenu engendrée par l'interprétation de l' « include » de code script, le terminal 100 demande un contenu à un serveur de script à une adresse URL stipulée par l' « include » de code script et correspondant au serveur de script 106.

Ainsi, si par exemple, l'« include » script est le suivant:
<script src= « http://www.monsite.com/monscript.js »></script>
le terminal 100 demande au serveur de script « www.monsite.com », le script « monscript.js ».

Selon une variante de l'étape 406, de l'« include » de code script est interrompue dès que l'utilisateur demande l'affichage d'une nouvelle page de données.

Puis, au cours d'une étape 407, le serveur de scripts 106 délivre un code script (« monscript.js » selon notre exemple) au terminal 100.

Ensuite lors d'une étape 408, le terminal 100 écrit dans sa mémoire, le contenu du script (ici « monscript.js ») rendu par le serveur de scripts, l'interprète et l'exécute. L'exécution du code script reçu consiste, par exemple, à ouvrir une fenêtre d'alerte contenant un message.

Puis, lors d'une étape 307, le terminal exécute les instructions qui suivent l'« include » de code script dans le contenu 202 délivré, notamment les instructions présentes dans la fin du corps 203 et dans la fin 204 de contenu.

Selon la première variante décrite en regard de la figure 2, le code actif n'est pas placé au sein du corps 203 du contenu 200 mais dans son entête 202, ou dans la fin 204. Il peut aussi être placé à l'extérieur des zones HTML tout en restant à l'intérieur du contenu fourni au terminal 100.

Lorsque l'« include » de code script est placé dans la partie entête 202, ou avant la zone HTML, l'étape 405 d'interprétation de l'«include » de script, l'étape 406 de demande de contenu, l'étape 407 de délivrance de code script et les étapes 408 d'interprétation et d'exécution de code script ont lieu avant l'étape 304 d'affichage de début de page (se confondant alors avec l'étape 307 d'affichage de fin de page).

Une application directe de la première variante est une application de type censure de page web tout à fait similaire à l'application de type censure décrite en regard de la figure 3.

Lorsque l' « include » de code script est placé dans la partie fin 204, ou après la zone HTML, l'étape 405 d'interprétation de l' «include » de script, l'étape 406 de demande de contenu, l'étape 407 de délivrance de code script et les étapes d'interprétation et d'exécution de code script 408 ont lieu après l'étape 307 d'affichage de fin de page (se confondant alors avec l'étape 304 d'affichage de début de page).

Une autre application directe de la première variante est une application de type annotation ou informations complémentaires (telles notamment des informations publicitaires) affichées à la suite des données à la fin de l'affichage de ces données tout à fait similaire à celle décrite en regard de la figure 3.

On note ainsi que les figures 3 et 4 décrivent deux modes de réalisation complémentaires de l'invention : selon la figure 3, le fournisseur d'accès insère directement un code script au sein des données alors que selon la figure 4, le fournisseur d'accès insère un « include » de code script qui sera utilisé par le terminal pour demander un contenu contenant lui-même un code script.

Par la suite, deux applications sont décrites. Selon un mode préféré de réalisation ces deux applications s'appuient sur la variante du protocole décrite en regard de la figure 4 mais elles peuvent aussi être mises en oeuvre selon le mode préféré de réalisation du protocole décrit en regard de la figure 3.

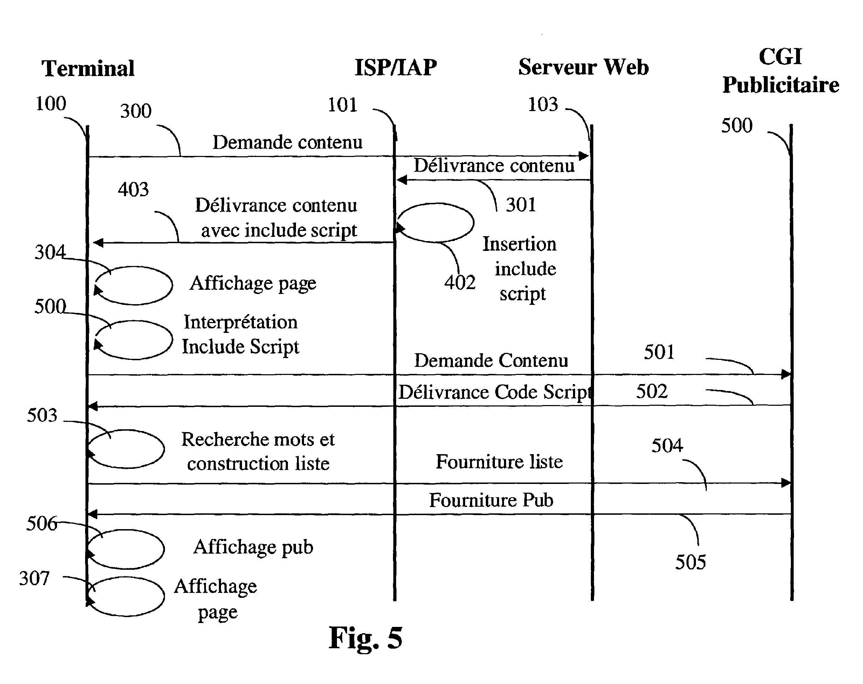

La figure 5 présente un protocole de communication pour une application de type insertion de publicité dont les premières étapes 300, 301, 402, 403 et 304 sont identiques aux premières étapes du protocole décrit en regard de la figure 4, hormis le fait que lors de l'étape 402 d'insertion d' « Include » de code script, le fournisseur d'accès 101 insère un «Include » de code script particulier dont le but final est la délivrance d'informations complémentaires, notamment publicitaires. Les premières étapes de la figure 5 étant similaires aux premières étapes de la figure 4, elles portent les mêmes numéros de référence et ne seront pas décrites davantage.

Suite à l'étape 304, d'affichage de début de page, au cours d'une étape 500 d'interprétation de l'« Include » de code script reçu, le terminal 100 interprète cet « Include » en décodant les instructions présentes dans l' « Include » de code script.

Puis, au cours d'une étape 501 de demande de contenu, le terminal demande un contenu auprès d'un serveur dont l'adresse URL a été spécifiée par l' « Include » de code script reçu, ici par exemple l'adresse du serveur 500 de type CGI publicitaire.

Ensuite, au cours d'une étape 502, le serveur 500 délivre le contenu spécifié au terminal 100. Ce contenu contient notamment un code actif permettant la recherche sémantique notamment par mots clés dans les données affichées sur l'écran du terminal 100. Ce code actif est ici un code script. Néanmoins, en variante, ce code actif pourra prendre toutes les formes de code actif déjà décrite en regard de la description du principe général de l'invention.

Puis, au cours d'une étape 503 de recherche sémantique, le terminal 100 exécute le code actif. Cette exécution consiste en une recherche d'informations spécifiques présentes dans la page affichée sur l'écran et en la construction d'une liste d'informations spécifiques qui ont été trouvées; les informations spécifiques sont notamment des mots clés, des adresses de liens, des adresses d'éléments rapportés dans la page téléchargée et des informations de création de la page téléchargées telles que son auteur, la date de création et la société à laquelle appartient son auteur. Les informations spécifiques recherchées sont mises à jour selon un critère prédéterminé et dépendent notamment d'un ou plusieurs critères dont notamment l'identité de l'utilisateur du terminal 100, ses préférences, l'adresse et/ou le nom de domaine du site distant ayant fourni le contenu 200, le type et/ou la version du navigateur utilisé par le terminal 100, le type et/ou la version du terminal 100, le protocole de transfert utilisé pour le téléchargement du contenu 200 téléchargé et le foumisseur d'accès permettant au terminal 100 d'accéder aux sites de contenu.

Ensuite, au cours d'une étape 504, le terminal 100 fournit la liste construite des informations spécifiques, au serveur 500.

Puis, au cours d'une étape 505, le serveur 500 analyse la liste d'informations spécifiques trouvées, qu'il a reçue du terminal 100, détermine une publicité (ou le cas échéant plusieurs publicités) adaptée à cette liste et les fournit au terminal 100. Ainsi, la publicité fournie est très ciblée.

Puis, au cours d'une étape 506, le terminal 100 affiche la publicité reçue du serveur 500 (ou le cas échéant les publicités reçues).

Puis, lors d'une étape 307, le terminal exécute les instructions qui suivent l'« include » de code script dans le contenu 202 délivré, notamment les instructions présentes dans la fin du corps 203 et dans la fin 204 de contenu.

Selon la première variante décrite en regard de la figure 2, le code actif n'est pas placé au sein du corps 203 du contenu 200 mais dans son entête 202, ou dans la fin 204. Il peut aussi être placé à l'extérieur des zones HTML tout en restant à l'intérieur du contenu fourni au terminal 100.

Le cas où le code actif est placé à la fin du corps 203, dans la partie 204 de fin de code HTML ou après cette partie 204 tout en restant dans le contenu 200 est particulièrement intéressant puisque dans ce cas l'intégralité de la page téléchargée est affichée lorsque la recherche sémantique sur cette page est effectuée lors de l'étape 503.

Selon une autre variante, l'opération 503 de recherche sémantique est utilisée pour des applications de type insertion d'informations (telles que notamment des liens vers des sites Internet, des annotations,..) relatives au résultat de la recherche sémantique (c'est-à-dire, par exemple, dans le même domaine qu'un ou plusieurs éléments de la liste des informations spécifiques, issue de la recherche sémantique, ou un domaine voisin ou en découlant), ces informations n'étant pas nécessairement publicitaires.

Selon une variante de l'étape 503, la recherche sémantique s'effectue non seulement sur les données de page affichées à l'écran mais sur l'ensemble du contenu 200 téléchargé. Le résultat de la recherche sémantique est alors utilisable par de nombreux types d'applications notamment des applications de censure (telle que décrite en regard de la figure 3), des applications modifiant la présentation des données, et/ou des applications d'insertion de données additionnelles.

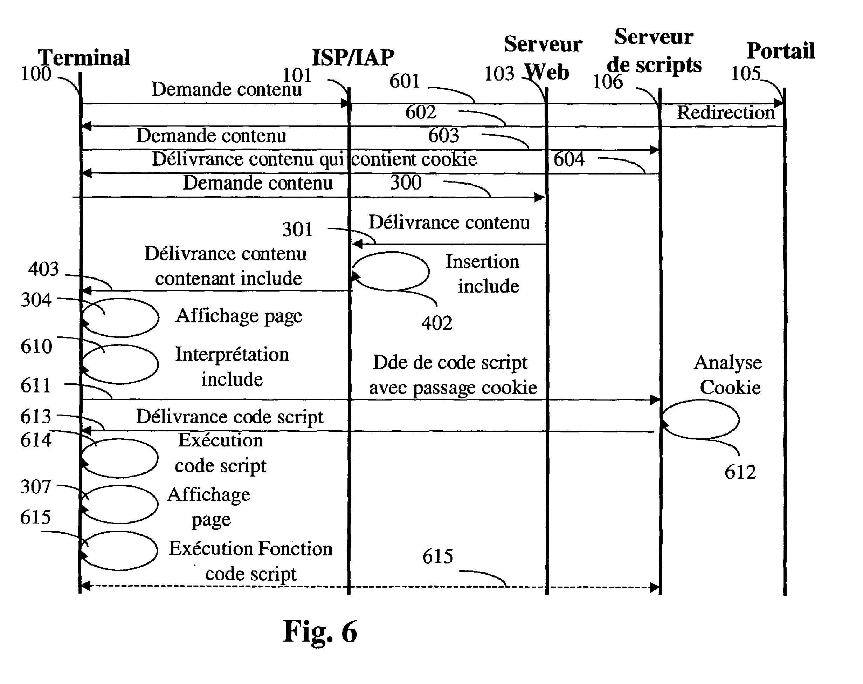

La figure 6 présente un protocole de communication pour une application de type application de type fourniture permanente d'un service Internet.

Au cours d'une étape 601 de demande de contenu, le terminal demande un contenu à un serveur 105 de type portail.

Puis, au cours d'une étape 602 de redirection, le serveur 105 indique au terminal 100 une adresse URL à laquelle le terminal 100 doit accéder.

Puis, au cours d'une étape 603, le terminal 100 accède à l'adresse URL du serveur 106 de scripts, spécifiée par le serveur 105 et demande un contenu.

Ensuite, au cours d'une étape 604, après une étape de définition d'un profil de l'utilisateur du terminal 100 (l'utilisateur du terminal 100 ayant par exemple, répondu à un questionnaire ou rempli un formulaire en ligne), le serveur 106 délivre au terminal 100 un contenu qui contient un cookie personnalisé, propre à l'utilisateur du terminal 100 et fonction du profil de l'utilisateur. On pourra ainsi avoir, par exemple, un cookie précisant le nom de l'utilisateur : « NomDuClient=prénom.nom » et plus généralement un profil précisant les préférences de l'utilisateur. Au cours de cette étape 604, après la délivrance du cookie personnalisé, le terminal 100 stocke en mémoire ce cookie qui est rattaché au serveur 106, et pourra accompagner chaque demande ultérieure de contenu au serveur 106 par le terminal 100.

Puis suivent, des étapes 300, 301, 402, 403 et 304 identiques aux premières étapes du protocole décrit en regard de la figure 4, hormis le fait que lors de l'étape 402 d'insertion d' « Include » de code script, le fournisseur d'accès 101 insère un «Include » de code script particulier dont le but final est la fourniture d'un code script prenant en compte un cookie délivré, rattaché au serveur de script 106. Ces étapes étant similaires aux premières étapes de la figure 4, elles portent les mêmes numéros de référence et ne seront pas décrites davantage.

Suite à l'étape 304 d'affichage de début de page, au cours d'une étape 610 d'interprétation de l' « Include » de code script reçu, le terminal 100 interprète cet « Include » en décodant les instructions présentes dans l' « Include » de code script.

Puis, au cours d'une étape 611, le terminal 100 demande un contenu au serveur 106 de scripts, en faisant passé le cookie présent sur le terminal 100, rattaché au serveur 106 et délivré lors de l'étape 604.

Puis, au cours d'une étape 612, le serveur 106 analyse le cookie reçu dans le but de délivrer un code script final adapté aux besoins de l'utilisateur du terminal 100.

Ainsi, si le cookie contient un profil d'utilisateur identifiant l'utilisateur et/ou indiquant par exemple ses préférences sous un format encodé, le serveur 106 génère un code script adapté au profil de l'utilisateur et personnalisé.

Ensuite, au cours d'une étape 613, le serveur 106 délivre au terminal 100 un code script tel que déterminé par le serveur 106 au cours de l'étape 612. Le terminal 100 conserve alors en mémoire le code script.

Puis, au cours d'une étape 614, le terminal 100 exécute le code script reçu qui consiste à associer une fonction présente dans le script à un événement du gestionnaire d'événements présent dans le navigateur du terminal. (comme par exemple, la frappe d'une touche de clavier, une action sur la souris associée au terminal, telle un clique-droit (ou, en d'autres termes, frappe du bouton droit de la souris), une action combinée sur le clavier et la souris ou un événement de navigation).

Ainsi, par exemple, une fonction d'affichage d'un menu permettant notamment l'accès à des services offerts par le serveur de scripts 106 peut être associée à un clique droit de souris. On a ainsi déclaré un ou plusieurs services qui deviennent accessibles par un simple clique droit de souris.

Ces services sont notamment:
- des services d'accès simplifiés à de l'information autre que celle contenue dans le contenu 200 ;
- des services d'accès simplifiés à des moteurs de recherche ;
- des services d'accès simplifiés à des fonctions évoluées d'un navigateur compris dans le terminal 100;
- des services de surveillance d'évènements externes; et
- des accès simplifiés à au moins un service disponible de manière manuelle sur Internet et qui nécessite au moins une saisie de données.

Puis, lors d'une étape 307, le terminal exécute les instructions qui suivent l'« include » de code script dans le contenu 202 délivré, notamment les instructions présentes dans la fin du corps 203 et dans la fin 204 de contenu.

Lors de ou à la suite de l'étape 307, lors d'une étape 615 à chaque fois que l'utilisateur du terminal 100 clique le bouton droit de la souris sous l'application navigateur, une fonction de code script d'affichage d'un menu va être exécutée, le gestionnaire d'événements du navigateur ayant associé cette fonction à l'action de clique-droit. L'utilisateur peut alors sélectionner un item du menu affiché qui lui permet notamment, d'accéder à un service proposé par le serveur de script 106.

En variante de l'étape 615, l'utilisateur peut alors sélectionner une icône qui au préalable aura été déclarée et affichée par le code actif, ce qui lui permet notamment, d'accéder à un service proposé par le serveur de script 106. On note que le gestionnaire d'événements du navigateur permet l'accès au service en associant cette fonction d'accès à l'action de sélection de l'icône.

En variante, le script délivré par le serveur de scripts 106 lors de l'étape 613 comprend une fonction ( telle par exemple l'affichage d'un menu) qui est exécutée sans qu'il soit nécessaire d'y associer un événement.

Les modes de réalisation décrits n'ont pas pour objectif de réduire la portée de l'invention. En conséquence, il pourra y être apporté de nombreuses modifications sans sortir du cadre de celle-ci ; notamment, on peut envisager où le code actif inséré n'est pas un code Javascript ou un « include » de code script interprété par un navigateur.

Ainsi, l'invention concerne aussi le cas où le code actif est:
- un script (non nécessairement Javascript);
- un objet navigateur ;
- une exploitation d'objet navigateur ;
- un applet ;
- une exploitation d'applet ; et/ou
- une macro instruction.

L'invention concerne aussi le cas où le code actif comprend au moins un type de codes parmi les codes susmentionnés incluant notamment les scripts, les « includes » de code script , les objets navigateurs, les applets, les exploitations d'objet navigateur ou d'applet et les macro-instructions.

Les codes ActiveX ® sont généralement insérés dans un contenu en étant délimités par des balises <object> et </object>.

Les codes applet sont insérés dans un contenu en étant délimités par des balises <applet> et <applet>.

En outre, on pourra apporter toute variante dans l'infrastructure des réseaux décrits à la portée de l'homme du métier. Certains éléments des réseaux décrits pourront par exemple être combinés. On peut notamment combiner l'équipement de contenu et de serveur de scripts. Le fournisseur de contenu pourra aussi fournir directement des scripts en réponse à une demande faisant suite à l'interprétation d'un « include» de code script par un terminal.

En outre, conformément à l'invention, le code actif est inséré par un élément quelconque faisant partie de l'infrastructure d'un réseau de communication, notamment Internet ; ainsi, cet élément peut-être non seulement un fournisseur de service ou d'accès Internet, mais aussi, par exemple, un serveur d'hébergeur de site Internet (tel que l'élément 102 décrit en regard de la figure 1), un routeur, un commutateur, une passerelle ou un proxy.

De plus, l'invention ne se limite pas au cas où un seul code script est inséré à la volée dans un contenu, mais s'applique au cas où plusieurs codes scripts sont insérés à la volée dans un contenu, ces codes scripts pouvant être d'un même type ou non, être dépendants ou non. (D'ailleurs les codes de type ActiveX ® et applet nécessitent généralement un code script pour être utilisés).

Ainsi, on peut, par exemple, insérer deux codes actifs dans un contenu permettant l'utilisation d'une application de type réunion sur Internet, l'un des codes étant de type ActiveX (<Object ID=Netmeeting CLASSID= « CLSID :identifiant »> <PARAM NAME = « MODE » VALUE= « telephone »>) et l'autre de type code script effectuant l'appel (<script language= « javascript1.2 »> Netmeeting.CallTo(« callto :0171000803+gateway=195.115.183.1+type=phone »); </script>).

Par ailleurs, l'invention ne se limite pas au cas où le code actif inséré à la volée est généré en fonction des données de la page téléchargée, mais elle s'étend au cas où le code actif inséré à la volée est généré en fonction d'un critère quelconque tel que notamment, le ou les utilisateurs du terminal 100, le terminal 100 lui-même, le site fournissant les données, l'élément de l'architecture du réseau insérant à la volée le code actif, le navigateur utilisé par le terminal 100. Au cours de l'opération de génération du code script inséré, un ou plusieurs critères pourront être pris en compte, notamment l'identité du ou des utilisateurs du terminal 100, ses ou leurs préférences, l'adresse et/ou le nom de domaine du site distant ayant fourni les données téléchargées sur le terminal 100, l'adresse de la page téléchargée, le type et/ou la version du navigateur utilisé par le terminal, le type et/ou la version du terminal 100, le protocole de transfert utilisé pour le téléchargement de la page téléchargée 200, l'élément de l'architecture de réseau insérant à la volée le code actif.

## Revendications

1. Procédé d'optimisation de la consultation d'une page de données consultée sur au moins un terminal (100) par au moins un utilisateur, ladite page étant téléchargée depuis un premier site distant (103; 104; 105;106), via un réseau de communication,
**caractérisé en ce qu'**il comprend une étape d'insertion (302; 402) à la volée d'au moins un code actif (201) dans ladite page (200) par au moins un élément (101; 102) de l'architecture dudit réseau,
**en ce que** la zone de ladite page (200) où est inséré ledit code actif (201) est déterminée selon le type d'action engendrée par ledit code actif,
et **en ce que** ledit code actif inséré à la volée est un code actif intermédiaire d'invocation, qui lorsqu'il est exécuté (500)par ledit terminal permet audit terminal, lors d'une étape d'invocation (406), d'invoquer un fournisseur (106) de code actif final, afin que le terminal reçoive de celui-ci un code actif spécifique final permettant l'exécution (408) d'un algorithme sur ledit terminal.

2. Procédé d'optimisation selon la revendication 1, **caractérisé en ce que** ledit réseau de communication est un réseau de type internet.

3. Procédé d'optimisation selon l'une quelconque des revendications 1 et 2, **caractérisé en ce que** ledit au moins un élément de l'architecture dudit réseau appartient au groupe comprenant:
- les serveurs d'hébergeurs (102) de site internet;
- les équipements de fournisseurs d'accès (101);
- les équipements de fournisseurs de services (101);
- les routeurs;
- les commutateurs ;
- les passerelles ; et
- les proxys.

4. Procédé d'optimisation selon l'une quelconque des revendications 1 à 3, **caractérisé en ce que** ledit code actif (201) inséré à la volée est un code actif final permettant l'exécution (306)d'un algorithme sur ledit terminal.

5. Procédé d'optimisation selon l'une quelconque des revendications 1 à 4, **caractérisé en ce que** lors de ladite invocation (406) du fournisseur (106) de code actif final par ledit terminal (100), ledit terminal (100) fournit en outre au moins un cookie.

6. Procédé d'optimisation selon la revendication 5, **caractérisé en ce qu'**il comprend en outre au moins une étape précédant ladite étape (302,402) d'insertion à la volée et faisant partie du groupe comprenant:
- les étapes (602) de redirection d'un accès dudit terminal (100) vers ledit fournisseur (106) de code actif final;
- les étapes de définition d'un profil d'utilisateur dudit terminal (100);
- les étapes de génération dudit au moins un cookie en fonction dudit profil d'utilisateur dudit terminal ;
- les étapes de fourniture dudit au moins un cookie (604) par ledit fournisseur (106) de code actif final audit terminal ; et
- les étapes de stockage dudit au moins un cookie par ledit terminal.

7. Procédé d'optimisation selon l'une quelconque des revendications 5 et 6, **caractérisé en ce que** ledit au moins un cookie est utilisé à des fins d'identification.

8. Procédé d'optimisation selon l'une quelconque des revendications 5 à 7, **caractérisé en ce que** ledit fournisseur (106) de code actif final tient compte du contenu dudit au moins un cookie pour générer ledit code actif final spécifique.

9. Procédé d'optimisation selon l'une quelconque des revendications 1 à 8, caractérisé en que ledit code actif appartient au groupe comprenant :
- les codes script interprétés par un navigateur ;
- les « includes » de code script interprétés par un navigateur ;
- les objets navigateurs ;
- les exploitations d'objet navigateur;
- les applets;
- les exploitations d'applet; et
- les macros instructions.

10. Procédé d'optimisation selon l'une quelconque des revendications 1 à 9, **caractérisé en ce que** ledit code actif (201) inséré dans ladite page est chargé et/ou interprété et/ou exécuté par ledit terminal (100) avant, pendant et/ou après l'affichage (304 ; 307)de ladite page (200)sur ledit terminal (100).

11. Procédé d'optimisation selon l'une quelconque des revendications 1 à 10, **caractérisé en ce que** ledit code actif (201) est exécuté dans un navigateur compris dans ledit terminal (100).

12. Procédé d'optimisation selon l'une quelconque des revendications 1 à 11, **caractérisé en ce que** ledit code actif (201) est généré spécifiquement en fonction d'au moins un critère propre à un élément faisant partie du groupe comprenant:
- ledit au moins un utilisateur dudit terminal (100);
- ledit terminal (100);
- ledit premier site distant (103; 104; 105; 106);
- ladite page (200);
- les éléments (101; 102)de l'architecture dudit réseau ; et
- le navigateur utilisé par ledit terminal(100).

13. Procédé d'optimisation selon la revendication 12, **caractérisé en ce que** ledit au moins un critère appartient au groupe comprenant:
- l'identité dudit au moins un utilisateur dudit terminal (100);
- les préférences dudit au moins un utilisateur dudit terminal (100);
- l'adresse et/ou le nom du domaine dudit premier site distant(103; 104; 105; 106);
- l'adresse de ladite page (200) téléchargée;
- le type et/ou la version du navigateur utilisé par ledit terminal (100);
- le type et/ou la version dudit terminal (100);
- le protocole de transfert utilisé pour le téléchargement de ladite page (200) téléchargée; et
- le fournisseur (101) d'accès (IAP) ou de service Internet (ISP) permettant audit terminal (100) d'accéder audit premier site distant (103 ;104 ;105 ;106).

14. Procédé d'optimisation selon l'une quelconque des revendications 1 à 13, **caractérisé en ce qu'**il est utilisé pour au moins une application appartenant au groupe:
- insertion, dans ladite page, d'informations, notamment publicitaires ;
- insertion, dans ladite page, d'informations, notamment publicitaires, fonction du contenu de ladite page (200);
- insertion, dans ladite page (200), d'informations relatives à des évènements gérés un deuxième site distant (106) connecté audit réseau ;
- insertion dans ladite page (200), d'informations relatives à des données disponibles sur un portail (105) ayant un rapport avec le contenu de ladite page ;
- fourniture à l'utilisateur, via ladite page (200), d'au moins un service fourni par au moins un troisième site distant (106) connecté audit réseau ;
- archivage d'informations liées à l'activité sur ledit réseau de l'utilisateur dudit terminal (200);
- modification de la présentation desdites données (200);
- censure d'au moins une donnée parmi lesdites données (200); et
- invocation (406 ; 501) d'au moins un second code actif.

15. Procédé d'optimisation selon la revendication 14, **caractérisé en ce qu'**il est utilisé pour au moins une application de type insertion dans ladite page d'informations additionnelles,
et **en ce que** ledit code actif met en oeuvre les opérations (615) suivantes:
- recherche d'au moins une information spécifique dans ladite page ;
- création d'une liste d'informations spécifiques trouvées dans ladite page ;
- création d'une zone d'insertion d'informations additionnelles dans ladite page ;
- fourniture (506) de ladite liste d'information spécifiques à un fournisseur d'informations additionnelles connecté audit réseau ; et
- remplissage (507) de ladite zone d'insertion d'informations additionnelles avec des données fournies par ledit fournisseur d'informations en réponse à ladite opération de fourniture de ladite liste d'informations spécifiques.

16. Procédé d'optimisation selon la revendication 15, **caractérisé en ce que** lesdites informations (506) additionnelles appartiennent au groupe comprenant:
- les informations publicitaires (506);
- les annotations;
- les liens complémentaires vers des sites distants traitant du même sujet que ladite page téléchargée;
- les liens complémentaires vers des sites distants traitant de sujets connexes au sujet de ladite page téléchargée ;
- les mots clés altematifs ;
- les notes attribuées audit premier site distant ; et
- les tables d'indexation des éléments de ladite page téléchargée.

17. Procédé d'optimisation selon l'une quelconque des revendications 14 à 16, **caractérisé en ce qu'**il est utilisé pour au moins une application de modification de la présentation desdites données ;
et **en ce que** ledit code actif met en oeuvre les opérations suivantes:
- recherche d'au moins une information spécifique dans ladite page ;
- création d'une liste d'informations spécifiques trouvées dans ladite page ;
- fourniture de ladite liste d'information spécifiques à un fournisseur d'informations connecté audit réseau ; et
- présentation d'au moins une partie desdites données téléchargée selon un format défini par ledit fournisseur d'informations en réponse à ladite opération de fourniture de ladite liste d'informations spécifiques.

18. Procédé d'optimisation selon l'une quelconque des revendications 14 à 17, **caractérisé en ce qu'**il est utilisé pour au moins une application de censure d'au moins une donnée parmi lesdites données,
et **en ce que** ledit code actif met en oeuvre les opérations suivantes:
- recherche d'au moins une information spécifique dans ladite page ;
- création d'une liste d'informations spécifiques trouvées dans ladite page ;
- fourniture de ladite liste d'information spécifiques à un fournisseur d'informations connecté audit réseau ; et
- censure d'au moins une partie desdites données selon au moins un critère défini par ledit fournisseur d'informations en réponse à ladite opération de fourniture de ladite liste d'informations spécifiques.

19. Procédé d'optimisation selon l'une quelconque des revendications 14 à 18, **caractérisé en ce qu'**il est utilisé pour au moins une application d'invocation d'au moins un second code actif,
et **en ce que** ledit code actif met en oeuvre les opérations suivantes:
- recherche d'au moins une information spécifique dans ladite page ;
- création d'une liste d'informations spécifiques trouvées dans ladite page ;
- fourniture de ladite liste d'information spécifiques à un fournisseur d'informations connecté audit réseau ; et
- invocation d'au moins un second code actif selon au moins un critère défini par ledit fournisseur d'informations en réponse à ladite opération de fourniture de ladite liste d'informations spécifiques.

20. Procédé d'optimisation selon l'une quelconque des revendications 14 à 19, **caractérisé en ce que** ladite au moins une information spécifique appartient au groupe d'informations comprenant:
- les mots clés ;
- les adresses de liens;
- les adresses des éléments rapportés dans ladite page téléchargée; et
- les informations de création de ladite page téléchargée.

21. Procédé d'optimisation selon l'une quelconque des revendications 14 à 20, **caractérisé en ce que** ladite au moins une information spécifique est mise à jour selon un critère prédéterminé.

22. Procédé d'optimisation selon la revendication 21 **caractérisé en ce que** ledit critère prédéterminé appartient à un groupe de critères comprenant:
- l'identité dudit au moins un utilisateur dudit terminal ;
- les préférences dudit au moins un utilisateur dudit terminal;
- l'adresse et/ou le nom du domaine dudit premier site distant;
- l'adresse de ladite page téléchargée;
- le type et/ou la version du navigateur utilisé par ledit terminal ;
- le type et/ou la version dudit terminal ;
- le protocole de transfert utilisé pour le téléchargement de ladite page téléchargé; et
- le fournisseur d'accès Internet permettant audit terminal d'accéder audit premier site distant.

23. Procédé d'optimisation selon l'une quelconque des revendications 1 à 22, **caractérisé en ce qu'**il est utilisé pour au moins une application de type fourniture permanente à l'utilisateur, via ladite page, d'au moins un service fourni par au moins un quatrième site distant connecté audit réseau,
et **en ce que** ledit code actif, lors de son exécution (614) par le terminal, déclare ledit au moins un service dans ladite page.

24. Procédé d'optimisation selon la revendication 23, **caractérisé en ce que** ledit code permet la mise en oeuvre (615) par le terminal d'un menu d'accès audit au moins un service.

25. Procédé d'optimisation selon l'une quelconque des revendications 23 et 24, **caractérisé en ce que** ledit au moins service appartient au groupe comprenant:
- des services d'accès simplifiés à de l'information autre que celle contenue dans ladite page ;
- des services d'accès simplifiés à des moteurs de recherche ;
- des services d'accès simplifiés à des fonctions évoluées d'un navigateur compris dans le terminal ;
- des services de surveillance d'évènements externes; et
- des accès simplifiés à au moins un service disponible de manière manuelle sur Internet et qui nécessite au moins une saisie de données.

26. Procédé d'optimisation selon l'une quelconque des revendications 23 à 25, **caractérisé en ce que** ledit au moins service est attaché à au moins un événement appartenant au groupe comprenant:
- les actions sur une interface homme-machine; et
- les évènements de navigation.

27. Procédé d'optimisation selon l'une quelconque des revendications 23 à 25, **caractérisé en ce que** ledit au moins service est attaché à au moins un élément de langage à marqueurs.

28. Procédé d'optimisation selon l'une quelconque des revendications 1 à 27 **caractérisé en ce que** ladite étape d'insertion (302; 402) à la volée est systématique ou sélective.

29. Procédé d'optimisation selon l'une quelconque des revendications 1 à 28 **caractérisé en ce que** l'exécution dudit code actif est interrompue lorsque l'utilisateur demande l'affichage d'une nouvelle page de données.

30. Procédé d'optimisation selon l'une quelconque des revendications 1 à 29 caractérisé en ce lorsque ladite page de données est composée d'au moins deux sous-pages, ledit code actif est inclus dans chaque dite sous-page.

31. Système permettant l'optimisation de la consultation d'une page de données consultée sur au moins un terminal (100) par au moins un utilisateur, ladite page étant téléchargée depuis un premier site distant (103; 104; 105; 106), via un réseau de communication, caractérisé ce qu'au moins un élément (101102) de l'architecture dudit réseau comprend des moyens d'insertion (302; 402) à la volée d'au moins un code actif (201) dans une zone de ladite page (200) déterminée selon le type d'action engendrée par ledit code actif,
et en ce que ledit code actif inséré à la volée est un code actif intermédiaire d'invocation, qui lorsqu'il est exécuté (500) par ledit terminal permet audit terminal, lors d'une étape d'invocation (406), d'invoquer un fournisseur (106) de code actif final, afin que le terminal reçoive de celui-ci un code actif spécifique final permettant l'exécution (408) d'un algorithme sur ledit terminal.

32. Dispositif d'optimisation de la consultation d'une page (200) de données consultée sur au moins un terminal (100) par au moins un utilisateur, ladite page (200) étant téléchargée depuis un premier site distant (103 ; 104 ; 105 ; 106), via un réseau de communication auquel appartient ledit dispositif,
**caractérisé en ce qu'**il comprend des moyens d'insertion (302) à la volée d'au moins un code actif dans une zone de ladite page (200) déterminée selon le type d'action engendrée par ledit code actif,
et **en ce que** ledit code actif inséré à la volée est un code actif intermédiaire d'invocation, qui lorsqu'il est exécuté (500) par ledit terminal permet audit terminal, lors d'une étape d'invocation (406), d'invoquer un fournisseur (106) de code actif final, afin que le terminal reçoive de celui-ci un code actif spécifique final permettant l'exécution (408) d'un algorithme sur ledit terminal.

33. Dispositif d'optimisation selon la revendication 32 **caractérisé en ce qu'**il appartient au groupe comprenant:
- les serveurs d'hébergeurs (102) de site Internet ;
- les équipements de fournisseurs d'accès (101, IAP);
- les équipements de fournisseurs de services(101, ISP);
- les routeurs;
- les commutateurs ;
- les passerelles ; et
- les proxys.
